# EUROPÄISCHE PATENTSCHRIFT

(11) **EP 1 502 048 B1**
(45) Veröffentlichungstag und Bekanntmachung des Hinweises auf die Patenterteilung: **19.06.2013**
(21) Anmeldenummer: 03701417.2
(22) Anmeldetag: 13.02.2003
(51) Int. Cl.: F16L 11/08

(54) **SPIRALSCHLAUCH**
SPIRAL HOSE
TUYAU FLEXIBLE SPIRALE

(30) Priorität: 26.04.2002 CH 715022002
(43) Veröffentlichungstag der Anmeldung: 02.02.2005
(73) Patentinhaber: Noviteck SA, 6862 Rancate (CH)
(72) Erfinder: PETAZZI, Pierluigi, I-22010 Castello-Valsolda (IT); SANSON, Marco, I-21100 Varese (IT); CODA, Giovanni, CH-6853 Ligornetto (CH)
(74) Vertreter: Troesch Scheidegger Werner AG
(86) Internationale Anmeldenummer: PCT/CH2003/000104
(87) Internationale Veröffentlichungsnummer: WO 2003/091615

(56) Entgegenhaltungen:
- CH-A5- 681 911
- DE-A- 1 966 018
- DE-A- 3 310 033
- GB-A- 2 023 762
- US-A- 1 394 300
- US-A- 4 172 473
- US-A- 4 620 569

## Beschreibung

Die vorliegende Erfindung betrifft einen Schlauch mit spiralförmiger Verstärkung nach dem Oberbegriff von Anspruch 1.

Thermoplastische, flexible Spiralschläuche bestehen in der Regel aus einer harten Spirale und einer weichen Wand. Die Spirale ist dabei häufig aus Hart-PVC gebildet, während die Wand aus einem weichen PVC, Polyurethan etc. besteht.

An einen solchen Schlauch werden eine Reihe von unterschiedlichen physikalischen und chemischen Anforderungen gestellt. So soll der Schlauch eine hohe Flexibilität aufweisen und eine grosse Elastizität besitzen. Weiter muss er eine den Anforderungen entsprechend genügende mechanischen Festigkeit sowohl bei positiven wie negativen Druckbelastungen aufweisen, d.h. eine geringe Längs- und Querdehnung sowie einen hohen Betriebs- und Berstdruck aufweisen. Weiter sind geringe Reibungswerte der Schlauchinnenwand gefordert und es kann auch antistatisches Verhalten oder gar eine gute Leitfähigkeit verlangt werden. Weitere Eigenschaften sind beispielsweise der spezifischen chemischen Widerstand, entsprechend dem Einsatzzweck des Schlauches beispielsweise für Chemikalien, Öle, Lebensmittel, Wasser etc. , UV-Beständigkeit beim ungeschützten Einsatz in der Natur usw.

Da die Erfüllung dieser Anforderungen teilweise zu einander entgegenstehenden Eigenschaften führt, werden die Schläuche häufig für bestimmte Zwecke optimiert, wobei dann betreffend einiger der Anforderungen Kompromisse eingegangen werden müssen.

Gerade für so genannte Mehrzweckschläuche, welche in grosser Anzahl für unterschiedlichste Zwecke, insbesondere in der Landwirtschaft und für industrielle Zwecke eingesetzt werden, besteht ein enormer Preisdruck und damit ein grosses Optimierungsbedürfnis. Derartige Schläuche bestehen in der Regel aus einer glatten Wand, welche durch eine Spirale mit rundem oder ovalem Querschnitt verstärkt ist. Ein derartiger Schlauch ist aus der US 1 394 300 A bekannt. Derartige Schläuche lassen sich in einem Arbeitsgang durch Extrusion oder Ko-Extrusion herstellen und weisen ein gutes Biegeverhalten auf. Um dennoch eine genügende Festigkeit zu gewährleisten, müssen genügend grosse Dimensionen eingehalten werden, d.h. genügende Materialstärken eingesetzt werden und auch qualitativ hochstehende Materialien verwendet werden.

Die Aufgabe der vorliegenden Erfindung bestand nun darin, einen Spiralschlauch zu finden, welcher bei einfachem Aufbau ein kleines Gewicht und ein grosses Widerstandsmoment aufweist.

Diese Aufgabe wird erfindungsgemäss durch einen Schlauch mit den Merkmalen nach Anspruch 1 gelöst.

Weitere bevorzugte erfindungsgemässe Ausführungsformen ergeben sich aus den Merkmalen der Ansprüche 2 bis 8.

Es hat sich gezeigt, dass die Ausbildung von einen eckigen Querschnitt aufweisender Verstärkungsspirale ein im vergleich zu herkömmlichen Spiralschläuchen gleiches Trägheitsmoment bei wesentlich geringerem Materialanteil zu erreichen. Dies führt vorteilhaft einerseits zu einem geringeren Gewicht des Spiralschlauches und andererseits wird weniger Material benötigt, was geringere Kosten zur Folge hat.

Dank den bevorzugten optimalen geometrischen Verhältnissen lässt sich der erfindungsgemässe Spiralschlauch einfach durch Extrusion oder Ko-Extrusion fertigen. Ebenfalls ist das Biegeverhalten mindestens gleich gut oder besser als bei herkömmlichen Spiralschlauchkonstruktionen.

Wenn ein erfindungsgemässer Schlauch mit gleichen Materialanteilen wie bei herkömmlichen Spiralschläuchen gefertigt wird, so weist dieser weit bessere Eigenschaften (Trägheitsmoment) auf als diese.

Es hat sich auch gezeigt, dass die erfindungsgemässe Konstruktion trotz dem eckigen Querschnitt der Verstärkungsspirale beim Biegen nicht schneller zum Knicken neigt, als dies bei herkömmlichen Spiralschläuchen auch der Fall ist.

Ein Ausführungsbeispiel der vorliegenden Erfindung wird nachstehend anhand der Figuren noch näher erläutert. Es zeigen
Fig. 1 schematisch den Längsschnitt durch einen Spiralschlauch;
Fig. 2 schematisch den Längsschnitt durch eine Ausführungsform eines erfindungsgemässen Spiralschlauches; und
Fig. 3 schematisch den Längsschnitt durch eine alternative Ausführungsform eines Spiralschlauches.

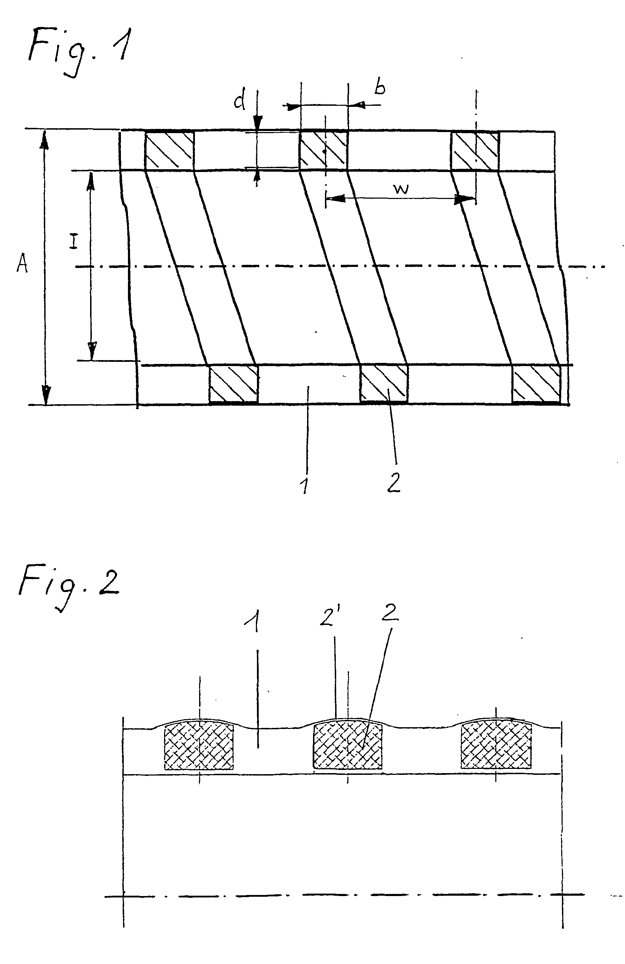

In Figur 1 ist der schematische Längsschnitt eines Spiralschlauches dargestellt, mit Wand 1 und darin eingebetteter Verstärkungsspirale 2. Die Verstärkungsspirale 2 weist einen eckigen Querschnitt auf, hier beispielsweise einen viereckigen Querschnitt.

Für einen typischen Einsatz als Mehrzweckschlauch weist der Spiralschlauch beispielsweise einen Innendurchmesser I von ca. 102 mmm und einen Aussendurchmesser A von ca. 112 mm auf. Die Breite b der Verstärkungsspirale beträgt dabei vorzugsweise ca. 7,5 mm und die Dicke ca. 5,1 mm. Der Abstand w der Querschnittmittelpunkte der Verstärkungsspirale beträgt dabei vorzugsweise 15 mm. Es hat sich gezeigt, dass bei einem doppelten Abstand w im Vergleich zur Breite b optimale Werte erzielt werden. Mit diesen Abmessungen wird ein geringeres Gesamtgewicht bei höherem Trägheits- und Widerstandsmoment der Verstärkungsspirale 2 als bei herkömmlichen Spiralschläuchen mit einen runden Querschnitt aufweisenden Verstärkungsspirale mit gleichem Innen- aber grösserem Aussendurchmesser erzielt. Dabei sind die Kosten im Vergleich ebenfalls reduziert.

In Figur 2 ist der schematische Längsschnitt durch eine Ausführungsform eines erfindungsgemässen Spiralschlauches dargestellt. Hier ist der Querschnitt der Verstärkungsspirale 2 ebenfalls im wesentlichen viereckig ausgebildet, wobei aber die zur Aussenwand der Schlauches gerichtete Wand 2' der Verstärkungsspirale 2 leicht konvex ausgebildet ist. Die Verstärkungsspirale 2 ist dabei vollständig in die Wand 1 eingebettet. Bei typischen Schlauchabmessungen wie bereits oben dargestellt beträgt die bevorzugte Breite der Verstärkungsspirale 7,5 mm und die Höhe 5,1 mm. Die Dicke der verbleibenden Wand gegen Innen im Bereich der Verstärkungsspirale beträgt vorzugsweise ca. 0,5 mm, nach Aussen noch ca. 0,2 mm.

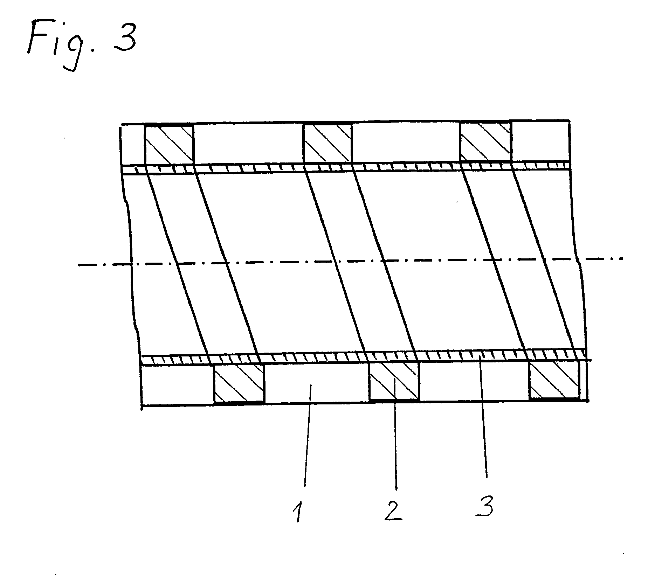

In Figur 3 ist schliesslich eine weitere Ausführungsform im schematischen Längsschnitt dargestellt. Auf der Innenseite des Schlauches ist dabei eine zusätzliche Schicht 3 aufgebracht. Diese zusätzliche Schicht besteht vorteilhaft aus einem vom Material der Wand 1 und der Verstärkungsspirale 2 verschiedenen Kunststoff, vorzugsweise einem Thermoplast wie Polyurethan. Die Schichtdicke weist dabei vorteilhaft eine Höhe zwischen 0,5 mm und 2,5 mm auf. Diese zusätzliche Schicht verhindert einen starken Abrieb der Innenseite des Schlauches durch das zu fördernde Medium.

Der Schlauch lässt sich in dieser Geometrie einfach durch Extrusion und Ko-Extrusion herstellen, was gerade für die Serienproduktion eine kostengünstige Lösung darstellt.

## Patentansprüche

1. Schlauch mit spiralförmiger Verstärkung mit einer Wand (1) und einer Verstärkungsspirale (2), wobei die Verstärkungsspirale (2) in der Wand (1) angeordnet ist und einen eckigen Querschnitt aufweist, **dadurch gekennzeichnet, dass** die radial zur äusseren Wandseite gerichtete Fläche(2') der Verstärkungsspirale (2) im Querschnitt konvex nach Aussen gewölbt ist.

2. Schlauch nach Anspruch 1, **dadurch gekennzeichnet, dass** die Wand (1) aus einem weichen Kunststoff, vorzugsweise PVC, und die Verstärkungsspirale (2) aus einem harten Kunststoff, vorzugsweise PVC, besteht.

3. Schlauch nach einem der Ansprüche 1 bis 2, **dadurch gekennzeichnet, dass** die Breite des Querschnittes im Vergleich zur Höhe des Querschnittes der Verstärkungsspirale (2) grösser ist, vorzugsweise in einem Verhältnis von 7 : 5 bis 9 : 5, vorzugsweise im Verhältnis 7,5 : 5,1.

4. Schlauch nach einem der Ansprüche 1 bis 3, **dadurch gekennzeichnet, dass** der Abstand des Querschnittsmittelpunktes (w) der Verstärkungsspirale (2) in Axialrichtung doppelt so gross ist wie die maximale Axialausdehnung (b) des Querschnittes der Verstärkungsspirale (2).

5. Schlauch nach einem der Ansprüche 1 bis 4, **dadurch gekennzeichnet, dass** die Verstärkungsspirale (2) vollständig in der Wand(1) eingebettet ist.

6. Schlauch nach Anspruch 5, **dadurch gekennzeichnet, dass** die Wand(1) im Bereich der Verstärkungsspirale (2) nach Innen eine Wandstärke von ca.10% der Dicke der Verstärkungsspirale (2) aufweist und nach Aussen ca. 4% der Dicke der Verstärkungsspirale (2) aufweist.

7. Schlauch nach einem der Ansprüche 1 bis 6, **dadurch gekennzeichnet, dass** die Wand (1) an der Innenseite eine zusätzliche Schicht (3) aufweist, vorzugsweise aus einem vom Material der Wand(1) und/oder der Verstärkungsspirale(2) verschiedenen Kunststoff, vorzugsweise einem Thermoplasten, mit einer bevorzugten Schichthöhe zwischen 0,5 und 2,5 mm.

8. Schlauch nach einem der Ansprüche 1 bis 7, **dadurch gekennzeichnet, dass** der Innendurchmesser des Schlauches zwischen 10 bis 360 mm beträgt.

## Claims

1. A hose with helical reinforcement with a wall (1) and a reinforcing spiral (2), in which the reinforcing spiral (2) is disposed in the wall (1) and exhibits an angular cross-section, **characterized in that** the surface (2') of the reinforcing spiral (2) directed radially toward the outer side of the wall is curved in cross-section convex toward the outside.

2. The hose according to claim 1, **characterized in that** the wall (1) is made of a soft plastic, preferably PVC, and the reinforcing spiral (2) is made of a hard plastic, preferably PVC.

3. The hose according to one of claims 1 through 2, **characterized in that** the cross-sectional diameter, compared to the cross-sectional height of the reinforcing spiral (2), is greater, preferably in a ratio of 7:5 to 9:5, preferably in the ratio of 7.5:5.1.

4. The hose according to one of claims 1 through 3, **characterized in that** the distance (w) of the center point of the cross-section of the reinforcing spiral (2) in the axial direction is twice as great as the maximum axial extent (b) of the cross-section of the reinforcing spiral (2).

5. The hose according to one of claims 1 through 4, **characterized in that** the reinforcing spiral (2) is completely embedded in the wall (1).

6. The hose according to claim 5, **characterized in that** the wall (1) in the area of the reinforcing spiral (2) exhibits toward the inside a wall thickness of about 10% the thickness of the reinforcing spiral (2) and toward the outside exhibits a wall thickness of about 4% the thickness of the reinforcing spiral (2).

7. The hose according to one of claims 1 through 6, **characterized in that** the wall (1) exhibits on the inside an additional layer (3), preferably made from a plastic different from the material of the wall (1) and/or the reinforcing spiral (2), preferably a thermoplastic, with a preferred layer height between 0.5 and 2.5 mm.

8. The hose according to one of claims 1 through 7, **characterized in that** the inside diameter of the hose is between 10 and 360 mm.

## Revendications

1. Tuyau flexible comprenant un renforcement présentant une forme de spirale, doté d'une paroi (1) et d'une spirale de renforcement (2), dans lequel la spirale de renforcement (2) est disposée dans la paroi (1) et elle présente une section transversale angulaire, **caractérisé en ce que** la surface (2') de la spirale de renforcement (2), orientée radialement en direction du côté de paroi extérieur, est cintrée de manière convexe vers l'extérieur dans la section transversale.

2. Tuyau flexible selon la revendication 1, **caractérisé en ce que** la paroi (1) est constituée d'une matière plastique souple, de préférence de PVC, et **en ce que** la spirale de renforcement (2) est constituée d'une matière plastique dure, de préférence de PVC.

3. Tuyau flexible selon l'une quelconque des revendications 1 à 2, **caractérisé en ce que** la largeur de la section transversale est en comparaison avec la hauteur de la section transversale de la spirale de renforcement (2) plus grande, de préférence selon un rapport allant de 7:5 à 9:5, de préférence selon un rapport de 7,5:5,1.

4. Tuyau flexible selon l'une quelconque des revendications 1 à 3, **caractérisé en ce que** la distance du point central de la section transversale (w) de la spirale de renforcement (2) est deux fois plus grande dans la direction axiale que l'extension axiale (b) maximale de la section transversale de la spirale de renforcement (2).

5. Tuyau flexible selon l'une quelconque des revendications 1 à 4, **caractérisé en ce que** la spirale de renforcement (2) est complètement intégrée dans la paroi (1).

6. Tuyau flexible selon la revendication 5, **caractérisé en ce que** la paroi (1) présente, dans la zone de la spirale de renforcement (2), vers l'intérieur, une épaisseur de paroi d'env. 10 % de l'épaisseur de la spirale de renforcement (2) et vers l'extérieur une épaisseur de paroi d'env. 4 % de l'épaisseur de la spirale de renforcement (2).

7. Tuyau flexible selon l'une quelconque des revendications 1 à 6, **caractérisé en ce que** la paroi (1) présente au niveau du côté intérieur une couche supplémentaire (3), de préférence constituée d'une matière plastique différente du matériau de la paroi (1) et/ou de la spirale de renforcement (2), de préférence d'une matière thermoplastique, présentant une hauteur de couche préférée comprise entre 0,5 et 2,5 mm.

8. Tuyau flexible selon l'une quelconque des revendications 1 à 7, **caractérisé en ce que** le diamètre intérieur du tuyau flexible est compris entre 10 et 360 mm.
